# EUROPÄISCHE PATENTSCHRIFT

(11) **EP 0 723 245 B1**
(45) Veröffentlichungstag und Bekanntmachung des Hinweises auf die Patenterteilung: **12.03.2003**
(21) Anmeldenummer: 95120312.4
(22) Anmeldetag: 21.12.1995
(51) Int. Cl.: G06K 19/077

(54) **Halbzeug mit einem elektronischen Modul**
Semi-finished product with electronic module
Produit semi-fini à module électronique

(30) Priorität: 23.12.1994 DE 4446369
(43) Veröffentlichungstag der Anmeldung: 24.07.1996
(73) Patentinhaber: Giesecke & Devrient GmbH, 81677 München (DE)
(72) Erfinder: Hoppe, Joachim, D-81667 München (DE); Hohmann, Arno, D-81369 München (DE)
(74) Vertreter: Klunker . Schmitt-Nilson . Hirsch

(56) Entgegenhaltungen:
- EP-A- 0 570 062
- WO-A-92/21105
- DE-A- 4 105 869
- FR-A- 2 586 886
- PATENT ABSTRACTS OF JAPAN vol. 010, no. 250 (P-491), 28.August 1986 & JP 61 077992 A (KYODO PRINTING CO LTD), 21.April 1986,

## Beschreibung

Die Erfindung betrifft ein Halbzeug, geeignet zum Einbau in einen Datenträger, mit einem elektronischen Modul, umfassend zumindest einen integrierten Schaltkreis und eine leitend mit dem Schaltkreis verbundene Spule, wobei die Spule zwischen zwei Trägerschichten angeordnet ist und der integrierte Schaltkreis in einem dafür vorgesehenen Hohlraum der beiden Trägerschichten angeordnet ist.

Halbzeuge der eingangs genannten Art sind bereits seit längerem bekannt. Sie werden verwendet, um hieraus Datenträger zu fertigen, die beispielsweise im innerbetrieblichen Bereich als Zugangsberechtigung verwendet werden. Die Energieversorgung des elektronischen Moduls und/oder der Datenaustausch mit externen Geräten erfolgt hierbei nichtberührend über die Spule.

Aus der JP-A-61-077992 ist eine kontaktbehaftete Karte bekannt, welche aus einem Halbzeug gefertigt wird, das aus einem Substrat mit einer Aussparung für den integrierten Schaltkreis besteht. Bei Fertigstellung der Karte wird in der Ober- und Unterseite des Substrats eine Deckschicht aufgebracht, welche an der den Kontaktflächen gegenüberliegenden Seite eine Aussparung enthält, die in einem letzten Herstellungsschritt mit einer Vergußmasse gefüllt wird.

Aus der EP-A-0 570 062 ist eine kontaktlose Karte bekannt, bei der eine innere Schicht vorgesehen ist, welche Aussparungen enthält, in die der integrierte Schaltkreis sowie die Spule eingebracht werden. Anschließend werden zu beiden Seiten dieser inneren Schicht Deckschichten auflaminiert.

Auch die EP-A- 723 244 der Anmelderin betrifft das Fachgebiet der vorliegenden Anmeldung.

Ein Halbzeug mit elektronischem Modul ist beispielsweise aus der WO 92/21105 bekannt, gegen die die Ansprüche abgegrenzt wurden. Das Halbzeug besteht aus zwei übereinander laminierten Kartenschichten. Eine der Schichten hat hierbei geeignete Vertiefungen in Form von Sacklöchern zur Aufnahme des integrierten Schaltkreises und der mit dem Schaltkreis leitend verbundenen Spule, wobei die zweite Schicht die Vertiefungen mit dem darin angeordneten integrierten Schaltkreis und der Spule verschließt. Der Datenträger wird aus dem Halbzeug fertiggestellt, indem beidseitig Deckschichten auf das Halbzeug auflaminiert werden.

In dem gezeigten Halbzeug befindet sich ein integrierter Schaltkreis in einem Hohlraum der Kartenschichten. Da der integrierte Schaltkreis den betreffenden Hohlraum nicht vollständig ausfüllt, kommt es beim fertiggestellten Datenträger oftmals zu einer unerwünschten Verformung der Deckschichten im Bereich des Hohlraums.

Ausgehend von dem genannten Stand der Technik liegt der Erfindung deshalb die Aufgabe zugrunde, ein Halbzeug zur Herstellung eines Datenträgers vorzustellen, mit dem Datenträger mit vollkommen ebenen Deckschichten erzielt werden können.

Die Aufgabe wird durch die in Anspruch 1 angegebenen Merkmale gelöst.

Der Grundgedanke der Erfindung ist darin zu sehen, daß der verbleibende Hohlraum zwischen den Trägerschichten und dem integrierten Schaltkreis mit einem Füllmaterial derart aufgefüllt ist, daß sich hierdurch im Bereich des Hohlraums plane Oberflächen des Halbzeuges ergeben, die mit den Oberflächen der Trägerschichten fluchten.

In einer Ausführungsform des Halbzeuges ist das elektronische Modul zwischen zwei Trägerschichten eingebettet. Das Halbzeug eignet sich zur Herstellung von Datenträgern mit sehr ebenen Oberflächen, die durch das Auflaminieren von Deckschichten auf das Halbzeug hergestellt werden können. Die Spule befindet sich in besagtem Halbzeug hierzu zwischen den Trägerschichten, während der integrierte Schaltkreis in einem dafür vorgesehenen Hohlraum der beiden Trägerschichten angeordnet ist. Der verbleibende Hohlraum zwischen dem integrierten Schaltkreis und den Schichten ist mit einem Füllmaterial aufgefüllt, so daß das Halbzeug vollkommen ebene Oberflächen aufweist. Vorzugsweise weisen die Trägerschichten dieselbe Dicke auf. Zusätzlich können in den Trägerschichten Vertiefungen ausgeformt sein, die einen Kanal bilden, der die Spule zumindest teilweise aufnimmt. Der Kanal kann teilweise mit Füllmaterial aufgefüllt sein.

Neben dem elektronischen Modul für den nichtberührenden Datenaustausch kann zusätzlich ein elektronisches Modul für den berührenden Datenaustausch, umfassend zumindest Kontaktflächen und einem leitend mit den Kontaktflächen verbundenen integrierten Schaltkreis, in einem weiteren Hohlraum der Trägerschichten untergebracht sein. Der verbleibende Hohlraum zwischen dem Modul und den Trägerschichten ist hierbei gleichfalls mit einem Füllmaterial aufgefüllt.

Weitere Vorteile und Weiterbildungen ergeben sich aus der Beschreibung, den Unteransprüchen sowie aus den Figuren, die nachfolgend erläutert werden.

Darin zeigen:

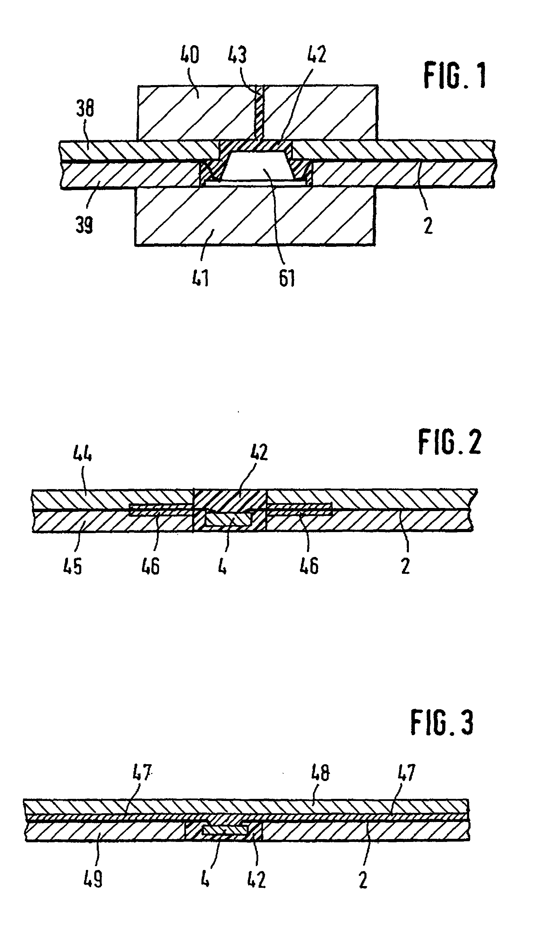

- Fig. 1 - 6: jeweils eine Schnittdarstellung durch ein Halbzeug, bei dem die Spule zwischen zwei Trägerschichten fixiert ist.

Die Fig. 1 - 6 zeigen ein erfindungsgemäßes Halbzeug im Querschnitt, das in einem Bereich einen Hohlraum aufweist. Allen Ausführungsbeispielen ist gemeinsam, daß der Hohlraum derart mit einer Füllmasse aufgefüllt wird, daß das Halbzeug ebene Oberflächen aufweist. Die in den Fig. 1 - 6 gezeigten Halbzeuge können also mit Deckschichten versehen werden, ohne daß sich diese im Bereich des Hohlraums merklich verformen. Dies hat den Vorteil, daß die Deckschichten insgesamt oder bereichsweise mit einem Element versehen werden können, das aus bestimmten Gründen eine ebene Oberfläche benötigt. Ein solches Element kann z. B. ein Hologramm sein, dessen optische Wirkung auf Feinstrukturen beruht, die durch eine nichtebene Oberfläche gestört werden können. Ein weiteres derartiges Element ist ein Magnetstreifen, dessen Daten mit einem Lesekopf nur sicher ausgelesen werden können, wenn der Streifen in einer möglichst ebenen Oberfläche liegt. Weitere Elemente sind denkbar.

Fig. 1 zeigt das Halbzeug in einer Füllstation. Das Halbzeug umfaßt die Trägerschichten 38 und 39, zwischen denen sich die Spule 2 befindet. Die Enden der Spule 2 sind leitend mit einem Chipträger 61 verbunden, in dessen Inneren sich der integrierte Schaltkreis 4, hier nicht gezeigt, befindet. Der Chipträger 61 ist hierbei in einem Durchbruch der Trägerschichten 38 und 39 angeordnet. Der verbleibende Hohlraum ist mit einer Füllmasse 42 derart aufgefüllt, daß sich auch im Bereich des Durchbruches ebene Oberflächen ergeben, die mit den auβenliegenden Oberflächen der Schichten 38 und 39 fluchten, so wie es in der Figur gezeigt ist. Als Füllmasse 42 können die unterschiedlichsten Materialien verwendet werden, wie beispielsweise Gießharze, die unter Wärme und UV-Licht aushärten oder thermoplastische Kunststoffe etc.

Die Herstellung eines eben beschriebenen Halbzeuges erfolgt wie folgt. Das elektronische Modul, bestehend aus der Spule 2 und dem leitend mit den Enden der Spule verbundenen Chipträger 61 wird auf die Schicht 39 aufgelegt, so daß der Chipträger 61 in der dafür vorgesehenen Durchbrechung der Schicht 39 angeordnet ist. Die Durchbrechung kann beispielsweise gestanzt sein. Daraufhin wird die Schicht 38 auf die Schicht 39 auflaminiert. Dies kann beispielsweise unter der Einwirkung von Wärme und Druck geschehen. Die Schichten können aber auch durch das dem Fachmann bereits hinlänglich bekannte Ultraschallschweißverfahren aufeinanderlaminiert werden. Dies hat den Vorteil, daß die Spulen als Energierichtungsgeber fungieren, wodurch die Trägerschichten besonders gut verschweißen und keine Hohlräume mehr zwischen den Spulendrähten verbleiben. Nach dem Auflaminieren der Schicht 38 wird das Laminat zwischen den Füllstationshälften 40 und 41 plaziert (vgl. Fig. 1) und der noch verbleibende Hohlraum zwischen Chipträger 61 und den Durchbrechungen in den Schichten 38 und 39 mit der Füllmasse 42 aufgefüllt, indem die Füllmasse 42 durch den Angußkanal 43 in den verbleibenden Hohlraum eingespritzt wird. Dies kann vorzugsweise unter einem erhöhten Druck geschehen, wodurch sichergestellt ist, daß der gesamte verbleibende Hohlraum mit Füllmasse aufgefüllt wird. Die Füllstation kann vor dem Auffüllen des Hohlraums zusätzlich dazu genutzt werden, die Trägerschichten 38 und 39 miteinander zu verbinden, z. B. unter der Einwirkung von Wärme und Druck. In diesem Fall ist mindestens eine der Füllstationshälften beheizbar. Die Füllstationshälften sind vorzugsweise aus Metall gefertigt, können aber auch an das jeweilige Füllmaterial 42 angepaßt sein und z. B. aus einem UV-strahlendurchlässigen Material bestehen, wenn UV-aushärtende Vergußmasse benutzt wird.

Selbstverständlich können auch mehrere Füllstationen nebeneinander angeordnet sein und die beschriebenen Schichten 38 und 39 in Form von langen Bändern vorliegen, die erst kurz vor der Fertigstellung des Datenträgers entsprechend abgelängt werden.

Fig. 2 zeigt eine erste Weiterbildung des Halbzeuges im Querschnitt. Das elektronische Modul umfaßt hierbei die Spule 2 und den direkt leitend hiermit verbundenen integrierten Schaltkreis 4. Die Trägerschichten 44 und 45 weisen neben den Durchbrechungen für den integrierten Schaltkreis 4 zusätzliche Vertiefungen 46 auf, die für einen Teilbereich der Spule einen Kanal bilden und können beispielsweise in Spritzguß hergestellt werden. Die Vertiefungen dienen der Aufnahme überschüssigen Füllmaterials 42. Die Herstellung des Halbzeuges erfolgt analog zu obengenanntem Verfahren.

Fig. 3 zeigt eine zweite Weiterbildung des Halbzeuges im Querschnitt. Das Halbzeug entspricht im wesentlichen demjenigen in Fig. 2. Die den Kanal für die Spule bildenden Vertiefungen 47 sind jedoch für die ganze Spule 2 ausgeformt, so daß die gesamte Spule in einem Kanal verläuft. Der restliche Hohlraum in den Vertiefungen 47 ist zumindest teilweise mit dem Füllmaterial 42 aufgefüllt. Darüber hinaus weist die Schicht 48 keine Durchbrechung zur Aufnahme des integrierten Schaltkreises auf. Die Herstellung des Halbzeuges erfolgt ebenfalls im wesentlichen analog zu dem im Zusammenhang mit Fig. 1 beschriebenen Verfahren. Das Füllmaterial 42 wird hier jedoch von unten eingespritzt.

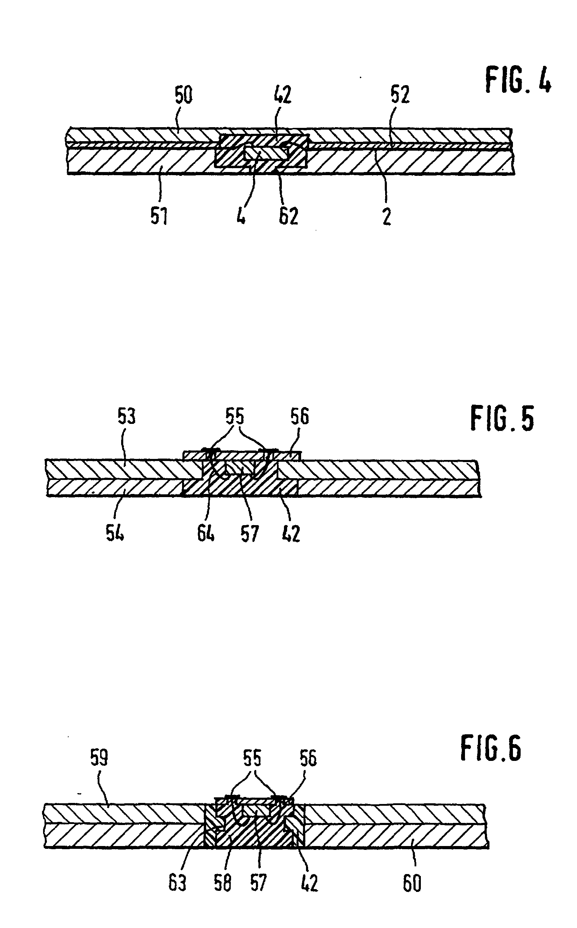

Fig. 4 zeigt eine dritte Weiterbildung des Halbzeuges im Querschnitt, die im wesentlichen der der Fig. 3 entspricht. Hierin wird im Gegensatz zu der in Fig. 3 gezeigten in der oberen Trägerschicht 50 eine Vertiefung zur Aufnahme des integrierten Schaltkreises 4 vorgesehen. Darüber hinaus weist die untere Trägerschicht 51 eine Vertiefung zur Aufnahme des integrierten Schaltkreises 4 sowie eine Durchbrechung 62 zum Einfüllen des Füllmaterials 42 auf. Die Herstellung erfolgt analog zu dem im Zusammenhang mit Fig. 3 beschriebenen Verfahren.

Fig. 5 zeigt eine vierte Weiterbildung des Halbzeuges im Querschnitt. Hierbei wird zusätzlich zu den nichtkontaktierenden elektronischen Modulen für den nichtberührenden Datenaustausch in einer weiteren Durchbrechung der Trägerschichten ein zweites elektronisches Modul für den berührenden Datenaustausch angeordnet. Das elektronische Modul besteht aus einem integrierten Schaltkreis 57, der auf einem Trägersubstrat 56 befestigt ist und leitend durch Durchbrechungen im Trägersubstrat 56 hindurch über Bonddrähtchen 64 mit Kontaktflächen 55, die auf der dem Schaltkreis 57 gegenüberliegenden Seite des Trägersubstrats liegen, verbunden ist. Der Einbau erfolgt z. B. nach dem Einbau des nichtberührend kontaktierenden elektronischen Moduls. Das Trägersubstrat 56 wird derart mit der Kartenschicht 53 verbunden, daß der integrierte Schaltkreis 57 und die leitenden Verbindungen 64 in den dafür vorgesehenen Durchbrechungen der Schichten 53 und 54 liegen, wie es auch in der Fig. 5 gezeigt ist. Danach wird der verbleibende Hohlraum in den Durchbrechungen der Kartenschichten 53 und 54 von der dem elektronischen Modul abgewandten Seite nach oben beschriebenem Verfahren mit einer Füllmasse 42 gefüllt. Hierdurch wird das elektronische Modul in der Durchbrechung der Kartenschichten 53 und 54 fixiert. Eine besonders gute Fixierung des elektronischen Moduls wird dann erreicht, wenn die Durchbrechung in der Schicht 54 größer ist als die Durchbrechung in der Schicht 53. In diesem Fall wird nämlich die Schicht 53 einerseits von dem Trägersubstrat 56 und andererseits von der Füllmasse 42 umgriffen, wie es auch in der Fig. 5 gezeigt ist, so daß das elektronische Modul gut gegen senkrecht zu den Schichten 53 bzw. 54 wirkende Kräfte gesichert ist.

Fig. 6 zeigt eine fünfte Weiterbildung eines erfindungsgemäßen Halbzeuges. Auch hierin wird neben den gemäß den Fig. 1 - 4 eingebauten nichtkontaktierenden Modulen zusätzlich ein elektronisches Modul für die berührende Kontaktabnahme in eine Durchbrechung der Trägerschichten 59 und 60 eingesetzt. Das elektronische Modul für die berührende Kontaktabnahme ist im wesentlichen wie das in Fig. 5 gezeigte aufgebaut. Zusätzlich jedoch ist der integrierte Schaltkreis mit einer Vergußmasse 58 umgeben, die aus dem Fachmann bereits hinreichend bekannten Materialien bestehen kann. Die Vergußmasse weist eine Nut 63 auf, so daß das elektronische Modul für die berührende Kontaktabnahme besser in der Durchbrechung der Trägerschichten fixiert ist.

Ausgehend von den in den Fig. 1 - 6 gezeigten Halbzeugen kann der Datenträger fertiggestellt werden, indem auf beiden Seiten des Halbzeuges Deckschichten auflaminiert werden. Sollten elektronische Module zur berührenden Kontaktabnahme gemäß Fig. 5 oder 6 in den Halbzeugen eingebaut sein, so weist die entsprechende Deckfolie im Bereich des Trägersubstrats 56 eine Durchbrechung auf. Die Dicke der oberen Deckfolie sollte dann so gewählt sein, daß sie bündig mit der Oberfläche des Trägersubstrats 56 abschließt.

Selbstverständlich ist die Erfindung nicht auf die obengenannten Ausführungsbeispiele beschränkt. Vielmehr sollen auch Mischformen der einzelnen Komponenten erfaßt werden.

## Patentansprüche

1. Halbzeug, geeignet zum Einbau in einen Datenträger, welches ein elektronisches Modul mit zumindest einem integrierten Schaltkreis (4) und einer leitend mit dem Schaltkreis verbundenen Spule (2) enthält, wobei die Spule zwischen zwei Trägerschichten (38, 39, 44, 45, 48, 49, 50, 51, 53, 54, 59, 60) angeordnet ist und der integrierte Schaltkreis (4) in einem dafür vorgesehenen Hohlraum der beiden Trägerschichten angeordnet ist, **dadurch gekennzeichnet, daß** der verbleibende Hohlraum zwischen den Trägerschichten und dem integrierten Schaltkreis mit einem Füllmaterial (42) derart aufgefüllt ist, daß sich hierdurch im Bereich des Hohlraums plane Oberflächen ergeben, die mit den Oberflächen der Trägerschichten fluchten.

2. Halbzeug nach Anspruch 1, **dadurch gekennzeichnet daß** zumindest in einer der Trägerschichten ein Kanal (46, 47, 52) vorgesehen ist, in dem sich zumindest Teile der Spule (2) befinden, wobei der Kanal zumindest teilweise mit dem Füllmaterial (42) gefüllt ist.

3. Halbzeug nach Anspruch 1 oder 2, **dadurch gekennzeichnet, daß** zusätzlich in einem weiteren Hohlraum in den Trägerschichten ein berührend kontaktierendes elektronisches Modul, umfassend zumindest Kontaktflächen (55) und einen integrierten Schaltkreis (57), der leitend mit den Kontaktflächen verbunden ist, aufweist, wobei der verbleibende Hohlraum zwischen dem berührend kontaktierenden Modul und den Trägerschichten mit dem Füllmaterial (42) aufgefüllt ist.

4. Halbzeug nach Anspruch 3, **dadurch gekennzeichnet, daß** zumindest der integrierte Schaltkreis (57) des berührend kontaktierenden elektronischen Moduls zusätzlich mit einer Vergußmasse (58) vergossen ist.

## Claims

1. A semifinished product suitable for installation in a data carrier and containing an electronic module with at least an integrated circuit (4) and a coil (2) electrically connected with the circuit, the coil being disposed between two carrier layers (38, 39, 44, 45, 48, 49, 50, 51, 53, 54, 59, 60) and the integrated circuit (4) being disposed in a specially provided cavity in the two carrier layers, **characterized in that** the remaining cavity between the carrier layers and the integrated circuit is filled with a filling material (42) in such a way that plane surfaces result in the area of the cavity that are flush with the surfaces of the carrier layers.

2. A semifinished product according to claim 1, **characterized in that** a channel (46, 47, 52) is provided at least in one of the carrier layers, said channel containing at least parts of the coil (2) and being filled at least partly with the filling material (42).

3. A semifinished product according to claim 1 or 2, **characterized in that** a contact-type electronic module comprising at least contact surfaces (55) and an integrated circuit (57) electrically connected with the contact surfaces is additionally provided in a further cavity in the carrier layers, the remaining cavity between the contact-type module and the carrier layers being filled with the filling material (42).

4. A semifinished product according to claim 3, **characterized in that** at least the integrated circuit (57) of the contact-type electronic module is additionally cast with a casting compound (58).

## Revendications

1. Demi-produit destiné à être intégré dans un support de données et qui comporte un module électronique muni d'au moins un circuit intégré (4) et une bobine (2) reliée de façon conductrice audit circuit, la bobine étant disposée entre deux couches de support (38, 39, 44, 45, 48, 49, 50, 51, 53, 54, 59, 60) et le circuit intégré (4) étant disposé dans un espace creux des deux couches de support prévues à cet effet, **caractérisé en ce que** l'espace creux restant entre les couches de support et le circuit intégré est rempli d'un matériau de remplissage (42) de sorte à obtenir, dans la zone de l'espace creux, des surfaces planes qui sont alignées avec la surface des couches de support.

2. Demi-produit selon la revendication 1, **caractérisé en ce qu'**au moins dans l'une des couches de support est prévu un canal (46, 47, 52), dans lequel se trouve au moins des parties de la bobine (2), le canal étant rempli au moins partiellement par le matériau se remplissage (42).

3. Demi-produit selon la revendication 1 ou 2, **caractérisé en ce qu'**il comporte en outre dans un autre espace creux, dans les couches de support, un module électronique en contact d'appui et comprenant au moins des surfaces de contact (55) et un circuit intégré (57), qui est relié de façon conductrice avec ces surfaces de contact, l'espace creux subsistant entre le module en contact d'appui et les couches de support étant remplies avec le matériau de remplissage (42).

4. Demi-produit selon la revendication 3, **caractérisé en ce qu'**au moins le circuit intégré (57) du module électronique en contact d'appui est muni de façon supplémentaire par coulée d'une masse coulée (58).
